**Europäisches Patentamt**

**European Patent Office**

**Office européen des brevets**

(19)

(11) Veröffentlichungsnummer: **0 346 528**
**A2**

(12) # EUROPÄISCHE PATENTANMELDUNG

(21) Anmeldenummer: **88120772.4**

(22) Anmeldetag: **13.12.88**

(51) Int. Cl.⁴: **G02B 6/28**

(30) Priorität: **15.06.88 DE 3820305**

(43) Veröffentlichungstag der Anmeldung:
**20.12.89 Patentblatt 89/51**

(84) Benannte Vertragsstaaten:
**DE ES FR GB IT**

(71) Anmelder: **Messerschmitt-Bölkow-Blohm
Gesellschaft mit beschränkter Haftung
Robert-Koch-Strasse
D-8012 Ottobrunn(DE)**

(72) Erfinder: **Poisel, Hans, Dr.
Neustädter Strasse 6
D-8060 Dachau(DE)**
Erfinder: **Puls, Marita
Hauptstrasse 126
D-8014 Neubiberg(DE)**
Erfinder: **Trommer, Gert, Dr.
Connollystrasse 16
D-8000 München 40(DE)**

(54) **Richtkoppler für Multi-Mode-Fasern.**

(57) Die Erfindung bezieht sich auf einen Richtkoppler für Multi-Mode-Fasern in Lichtwellenleitertechnik der aus HCS-Fasern hergestellt ist, deren Kern/Mantel-Verhältnis groß und deren numerische Apertur hoch ist. Es wird ein Ausführungsbeispiel beschrieben und in den Figuren der Zeichnung dargestellt.

EP 0 346 528 A2

FIG. 1

# Richtkoppler für Multi-Mode- Fasern

Die Erfindung bezieht sich auf einen Richtkoppler für Multimode-Fasern in Lichtwellenleitertechnik für Fasern mit Quarzkern und Plastikmantel.

Richtkoppler werden benötigt, um Signale von 1...n Eingängen auf n Ausgänge verteilen zu können. Ein Ausführungsbeispiel von einem 2 x 2-Koppler nach dem Stand der Technik ist in der Figur 3 skizziert. In der Lichtwellenleitertechnik offenbart der Stand der Technik bisher drei verschiedene Typen und zwar den Schliffkoppler, den Schmelzkoppler und den integriert-optischen Koppler.

Alle diese bekannten Arten sind jedoch mit Problemen behaftet, so eignen sich Schliffkoppler nur für die 2 x 2-Koppler, die Schmelzkoppler sind wegen der unterschiedlichen Schmelzpunkte von Quarz und Plastik nur für Fasern mit Quarzkern und Quarzmantel geeignet und die integriert-optischen Koppler sind bisher nur für Kerndurchmesser < 100 μm herstellbar, zudem treten hier zusätzliche Ankoppelprobleme zur Faser auf.

Der vorliegenden Erfindung liegt die Aufgabe zugrunde, Richtkoppler der eingangs erwähnten Art für Multi-Mode-Fasern zu schaffen, der nicht nur die Probleme des Standes der Technik löst, die Herstellung vereinfacht, sondern auch die Herstellung von nxn-Kopplern mit Dickkernfasern, z.B. einen 8 x 8-Koppler mit 300μm - Kern und 325μm-Aussendurchmesser, erlaubt.

Diese Aufgabe wird durch die im Anspruch 1 aufgezeigten Maßnahmen gelöst. In den Unteransprüchen sind Weiterbildungen und Ausgestaltungen angegeben und in der nachfolgenden Beschreibung ist ein Ausführungsbeispiel erläutert und in den Figuren der Zeichnung skizziert. Es zeigen:

Fig. 1 einen Längsschnitt durch das Ausführungsbeispiel eines 2 x 2-Kopplers,

Fig. 2 einen Schnitt entlang der Linie A - B gemäß Fig. 1,

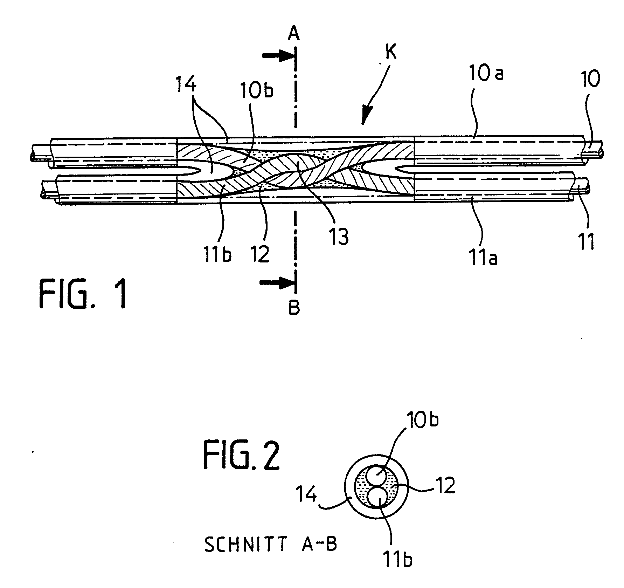

Der vorgeschlagene Richtkoppler wird am Beispiel eines 2 x 2-Kopplers, der in der Fig. 1 skizziert ist, erläutert. Für diesen Koppler werden HCS-Fasern (Hard Clad Silica) verwendet, die mit einem Kunststoffmantel versehen sind. Die beiden HCS-Faserstränge aus je einem Faserkern 10b, 11b und dem jeweiligen Fasermantel 10a, 11a, deren Verhältnis von Kern/Mantel groß - beispielsweise 95 % und deren numerische Apertur hoch ist (z.B. NA = 0,37), werden am sogenannten Koppelort K durch ein geeignetes Lösungsmittel über eine bestimmte Länge bzw. Strecke von dem Kunststoff-Fasermantel 10a bzw. 11a befreit. Die Faserkerne werden also "bloßgelegt". Danach werden die beiden Faserkerne 10b, 11b miteinander in Kontakt 13 gebracht, was in einfacher Weise durch Verdrillen geschieht, dann wird der Kopplerort K in einen optischen Kleber 12 eingebettet, der den gleichen Brechungsindex besitzt wie die Faserkerne 10b, 11b., d.h. n = $n_{Ke}$. Um nun eine Minimierung des Lichtverlustes zu gewährleisten ist das Kleberbett so ausgeführt, daß ein sanfter bzw. harmonischer Übergang von Einzelfaser zu Einzelfaser 10b, 11b zur Koppelstrecke geschaffen ist. In der Fig. 1 ist dies zeichnerisch dargestellt. Anschließend wird der Kunststoffmantel 14 wieder aufgebracht - beispielsweise durch Tauchen etc. - wobei dessen Brechungsindex demjenigen des ursprünglichen Fasermantels entspricht (n < $n_{Ke}$).

In Fig. 2 ist ein Schnitt A-B gezeigt. Prinzipiell kann der Koppler in der Mitte aufgetrennt werden, so daß Bündel unterschiedlicher Fasern - jedoch gleichen Bündeldurchmessers - in der Koppelmitte miteinander verbunden werden können. So lassen sich beispielsweise 2 x 5- Koppler anfertigen.

## Ansprüche

1. Richtkoppler für Multi-Mode-Fasern in Lichtwellenleitertechnik für Fasern mit Quarzkern und Plastikmantel, **dadurch gekennzeichnet,** daß der Koppler (K) aus HCS - (Hard Clad Silica) Fasern gebildet ist, deren Kern/Mantel- Verhältnis groß - beispielsweise 95 % - und deren numerische Apertur hoch ist.

2. Richtkoppler nach Anspruch 1 **dadurch gekennzeichnet,** daß am Ort des Kopplers (K) der Fasermantel (10a, 11a) entfernt wird, die Faser-Kerne (10b, 11b) miteinander in Kontakt 13 gebracht werden - beispielsweise durch Verdrillen - und anschließend die Faserkerne (10b, 11b) inklusive des Kopplerortes (K) in einem optischen Kleber (12) eingebettet werden, dessen Brechungsindex gleich demjenigen der Faser-Kerne (10b, 11b) ist (n = $n_{Ke}$) und daß der Kleber (12) die Einzelfaserkerne (10b, 11b) durch einen harmonischen Übergang mit der Koppelstrecke verbindet.

3. Richtkoppler nach Anspruch 1 oder 2, **dadurch gekennzeichnet,** daß der Kopplerort (K) mit einem Kunststoffmantel (14) umgeben wird, dessen Brechungsindex demjenigen des ursprünglichen Fasermantels (10a, 11a) entspricht (n < $n_{Ke}$).

4. Richtkoppler nach den Ansprüchen 1 bis 3, **dadurch gekennzeichnet,** daß durch Auftrennung der Kopplermitte dort Bündel unterschiedlicher Einzelfaserkerne (10b, 11b,...11n) - beispielsweise 2 x

Koppler - mit gleichem Bündeldurchmesser miteinander verbunden werden.

FIG. 1

FIG. 2

SCHNITT A-B

10499